# EUROPÄISCHE PATENTSCHRIFT

(11) **EP 0 981 875 B1**
(45) Veröffentlichungstag und Bekanntmachung des Hinweises auf die Patenterteilung: **27.08.2008**
(21) Anmeldenummer: 99903862.3
(22) Anmeldetag: 02.03.1999
(51) Int. Cl.: H04L 12/12, H04L 12/40, B60R 16/02

(54) **SYSTEM ZUM ÜBERTRAGEN VON DATEN**
DATA TRANSMISSION SYSTEM
SYSTEME DE TRANSMISSION DE DONNEES

(30) Priorität: 10.03.1998 DE 19810235
(43) Veröffentlichungstag der Anmeldung: 01.03.2000
(73) Patentinhaber: NXP B.V., 5656 AG Eindhoven (NL)
(72) Erfinder: MORES, Robert, NL-5656 AA Eindhoven (NL)
(74) Vertreter: Volmer, Georg
(86) Internationale Anmeldenummer: PCT/IB1999/000347
(87) Internationale Veröffentlichungsnummer: WO 1999/046888

(56) Entgegenhaltungen:
- EP-A- 0 773 650
- US-A- 5 633 537

## Beschreibung

Die Erfindung betrifft ein Bussystem mit mehreren Stationen, die über eine Leitungsanordnung miteinander gekoppelt sind und jeweils einen Übertrager und eine Steuereinheit aufweisen und die in einen Ruhezustand oder einen Betriebszustand versetzt werden können.

Derartige Systeme kommen überwiegend in Kraftfahrzeugen zum Einsatz. Kfz, die auch nach wochenlangem Parken noch betriebsbereit sein müssen, unterliegen verschärften Ruhestrombedingungen. In den Fahrzeugen befindet sich zunehmend Unterhaltungs-, Komfort- und Kommunikationselektronik, die auch im geparkten Zustand des Fahrzeuges mindestens hin und wieder aktiviert wird, um Überwachungsfunktionen auszuführen oder für den Fahrer Informationen im voraus zu sammeln, wie z.B. Verkehrsfunknachrichten.

Aus der US 5633537 ist ein Kommunikationssystem mit Kommunikationsknoten bekannt, bei dem die Kommunikationsknoten zur Verringerung der Stromaufnahme in einen Schlafmodus versetzt werden können.

In der DE 197 04 862 wird ein System beschrieben, bei dem in einem Bussystem zwischen einer Anzahl von Stationen durch geeignete Wahl von Signal- und Weckpegeln ein Teilsystem ermöglicht wird, bei dem ein Teil der Stationen miteinander kommuniziert und sich der andere Teil der Stationen dieses Bussystems im Ruhebetrieb befindet. Mittels eines bestimmten, von normalen Signalpegeln eindeutig unterscheidbaren Weckpegels wird das gesamte System geweckt, d.h. alle Stationen wechseln zunächst vom Ruhebetrieb in den Normalbetrieb. Daraufhin werden die Teilnehmer des Teilsystems identifiziert und die nicht betroffenen Stationen wechseln zurück in den Ruhebetrieb.

Diese Lösung hat den Nachteil, daß nach wie vor alle Stationen mindestens einmal zu Beginn einer jeden Kommunikationsphase eines Teilsystems im Normalbetrieb sind. Auf diese Weise ist der Stromverbrauch nicht deutlich reduziert, insbesondere wenn die Kommunikation häufig und kurz notwendig ist. Da die nichtbeteiligten Stationen im Ruhebetrieb sind, werden von dem Übertrager die erforderlichen Ruhespannungspegel nicht bereitgestellt, so daß die Übertragungseigenschaften des gesamten Systems beeinträchtigt Sind.

Aufgabe der Erfindung ist es, einen Teilnetzbetrieb zu realisieren, bei dem der Energieverbrauch reduziert ist und die Funktionstüchtigkeit des Übertragungssystems von der Funktionstüchtigkeit des Mikrocontrollers zu entkoppeln.

Diese Aufgabe wird erfindungsgemäß dadurch gelöst, daß wenigstens eine Station zum Wechsel vom Ruhezustand, in welchem die Station stromlos geschaltet ist, in einen Bereitschaftszustand nach Empfang des ersten Wecksignals vorgesehen ist, wobei die Station in dem Bereitschaftszustand andere Stationen ungestört kommunizieren läßt und an in dem Bussystem ausgeführten Teilfunktionen, für die die Station nicht benötig wird, nicht teilnimmt" und daß nach Empfang eines zweiten Wecksignals, mit dem Stationen selektiert werden, selektierte Stationen in den Normalzustand mit nicht reduzierter Stromaufnahme geschaltet werden.

Bussysteme weisen mehrere Stationen auf, wobei die einzelnen Stationen unterschiedliche Funktionen ausführen können. Zur Ausführung von Teilfunktionen ist jedoch nicht die volle Funktüchtigkeit aller am Bussystem angeschlossenen Stationen notwendig. Die Stationen sind über eine Leitungsanordnung miteinander verbunden und beinhalten neben einem Übertrager eine Steuereinheit.

Um ein Teilsystem zu realisieren, werden zunächst alle am Bussystem angeschlossenen Stationen mit einem über die Leitungsanordnung gesendeten ersten Wecksignal oder einer ersten Weckanforderung von einem Ruhezustand in einen Bereitschaftszustand versetzt. Im Ruhezustand sind die Stationen stromlos geschaltet und haben einen sehr geringen Energieverbrauch. Die Stationen beinhalten einen Empfänger im Übertrager auf, der alle notwendigen Eigenschaften aufweist, ein erstes Wecksignal zu empfangen. Nach Empfang dieses ersten Wecksignals werden die Stationen in einen Bereitschaftszustand geschaltet. In diesem Bereitschaftszustand ist der Stromverbrauch etwas höher als im Ruhezustand, aber die Station leistet alle Eigenschaften, die mindestens erfüllt sein müssen, um andere Stationen uneingeschränkt kommunizieren zu lassen.
Der Energieverbrauch liegt jedoch weit unter dem im Normalzustand. Außerdem ist die Station in dieser Betriebsart in der Lage, ein an sich gerichtetes zweites Wecksignal oder Weckanforderung zweifelsfrei festzustellen. Nach Identifizierung des zweiten Wecksignals setzt die Steuereinheit die selektierte Station in den Normalzustand. Da zur Ausführung von Teilfunktionen meist mehrere einzelne Stationen miteinander kommunizieren, wird das zweite Wecksignal an alle Stationen gesendet, die zur Ausführung einer Teilfunktion notwendig sind. Mit diesem zweiten Wecksignal und dem Wechsel der selektierten Stationen in den Normalzustand bildet sich ein Teilsystem zur Ausführung einer Teilfunktion heraus. Stationen, die zur Ausführung der jeweiligen Teilfunktion nicht notwendig sind, verharren im Bereitschaftszustand.

Die Steuereinheit der Station beinhaltet einen Mikrocontroller und einen Protokollcontroller. Der Mikrocontroller übernimmt anwendungsspezifische Aufgaben und der Protokollcontroller ist für die Abwicklung eines vereinbarten Übertragungsprotokolls verantwortlich.

Als vorteilhaft erweist es sich, daß der Übertrager dazu vorgesehen ist, das erste und auch das zweite Wecksignal zu empfangen. Für den Empfang des ersten Wecksignals weist der Übertrager einen Empfänger auf, der auch im Ruhezustand in der Lage ist, eine erste Weckanforderung zu erkennen, nach dessen Empfang die Station vom Übertrager aus dem Ruhezustand in den Bereitschaftszustand versetzt wird. In diesem Bereitschaftszustand ist der Übertrager im Stande ein zweites Wecksignal, welches direkt an die jeweilige Station zu deren Selektion gesandt wurde, zu erkennen. Erst wenn der Übertrager erkannt hat, daß seine Station selektiert wurde, informiert er die Steuereinheit, die die gesamte Station in den Normalzustand versetzt. Die anderen Stationen, die für die Teilfunktion nicht notwendig sind, bleiben im Bereitschaftszustand. Wenn die Kommunikation zwischen den im Normalzustand befindlichen Stationen beendet ist, werden diese von ihrer jeweiligen Steuereinheit in den Bereitschaftszustand versetzt. Der Übertrager hält die Stationen, die gerade im Normalzustand waren und die Stationen, die auch während der Kommunikation im Bereitschaftszustand waren, solange im Bereitschaftszustand, bis beispielsweise auf dem gesamten Bussystem seit einer festzulegenden Zeit keine Kommunikation mehr stattfindet. Dadurch wird eine optimale Energieeinsparung erreicht. Gleichzeitig wird durch die Entkopplung der Zuständigkeiten zwischen Übertrager und Steuereinheit die Verfügbarkeit des gesamten Bussystem erhöht. Stationen, in denen Fehler in der Steuereinheit aufgrund von beispielsweise Softwarefehlern auftreten, können somit nicht die Kommunikation und die Verfügbarkeit des gesamten Bussystems beeinflussen, da der Übertrager auch bei einer Fehlfunktion der Steuereinheit alle Eigenschaften leistet, die notwendig sind, alle anderen Stationen uneingeschränkt kommunizieren zu lassen.

In einer weiteren Ausgestaltung der Erfindung ist vorgesehen, daß erste Wecksignal beispielsweise durch eine lokal geweckte Station zu generieren. Da die einzelnen Stationen unterschiedliche Funktionen ausführen, weisen sie auch unterschiedliche Komponenten auf. Beispielsweise könnte eine Station über eine interne Uhr lokal geweckt werden, um die Außentemperaturen zum Vorheizen des Fahrzeuges abzufragen. Oder eine Station für den Empfang von Verkehrsnachrichten würde durch ein empfangenes Sendezeichen für den Verkehrsfunk lokal geweckt werden, um die Verkehrsnachrichten zu sammeln, die dem Kraftfahrer bei Fahrtantritt dann routenabhängig zur Verfügung gestellt werden.
Wenn eine Station durch derartige äußere Einflüsse lokal geweckt wird, wird sie von ihrer Steuereinheit direkt in den Normalzustand versetzt. Aus diesem Zustand heraus ist es ihr möglich, das erste Wecksignal über das Bussystem an alle Stationen zu versenden. Daraufhin werden alle Stationen von ihren Übertragern in den Bereitschaftszustand versetzt. Die lokal geweckte Station sendet daraufhin zweite Wecksignale an alle Stationen, die für die momentan auszuführende Teilfunktion notwendig sind. Durch diese lokale Weckfunktion und das selbständige Versenden von Wecksignalen ist es möglich, das Bussystem für Teilfunktionen und zur Ausbildung eines Teilsystems auch dezentral zu konfigurieren, so daß auch hier erheblich Energie gespart wird.

In einer bevorzugten Weiterbildung des Bussystems ist vorgesehen, daß die Station sich in einem Ruhezustand mit eingeschalteter geregelter Spannungsversorgung befindet. Stationen können sich in diesem Ruhezustand mit eingeschalteter geregelter Spannungsversorgung befinden, wenn sie lokale Teilfunktionen ausüben oder darauf warten, Daten zu empfangen. In einem derartigen Fall wird die Station vom Übertrager bei Empfang des ersten Wecksignals in den Bereitschaftszustand mit eingeschalteter geregelter Spannungsversorgung versetzt. Nach Empfang des zweiten Wecksignals löst der Übertrager einen Warmstart aus, indem er einen Interrupt an die Steuereinheit sendet. Die Steuereinheit versetzt die Station in den Normalzustand.

Um den Stromverbrauch weiter zu reduzieren ist vorgesehen, Stationen in einem Ruhezustand mit ausgeschalteter geregelter Spannungsversorgung zu betreiben. Dazu hält der Übertrager jeder Station einen Empfänger bereit, der mit ungeregelter Spannung betrieben wird. Dieser Empfänger ist nur für den Empfang des ersten Wecksignals oder eines lokalen Wecksignals, welches von einem Schalter oder Steuersignal ausgelöst wird, vorgesehen. Nach Empfang eines derartigen Wecksignals wird die Station vom Übertrager in den Bereitschaftszustand mit ausgeschalteter geregelter Spannungsversorgung versetzt. Die Station wird dann mit ungeregelter Spannung betrieben. Wenn die Station dann durch das zweite Wecksignal selektiert wird, schaltet der Übertrager über ein Steuersignal die geregelte Spannungsversorgung ein und versetzt damit die Station in den Normalzustand. Diese Unterscheidung ermöglicht eine weitere Energieeinsparung.

Desweiteren wird die Aufgabe der Erfindung noch durch eine Station in einem Bussystem mit einem Übertrager und einer Steuereinheit dadurch gelöst, daß für den Wechsel von einem Ruhezustand in einen Bereitschaftszustand nach Empfang eines ersten Wecksignals der Übertrager vorgesehen ist und daß nach Empfang eines zweiten Wecksignals, mit dem die Station selektiert wird, diese von der Steuereinheit in einen Normalzustand geschaltet wird.

Nachfolgend wird ein Ausführungsbeispiel anhand der Zeichnungen näher erläutert.
Es zeigen:
- Fig. 1: schematischen Aufbau eines Bussystems
- Fig. 2: schematischen Aufbau einer Station
- Fig. 3: Schema der Zustandsübergänge

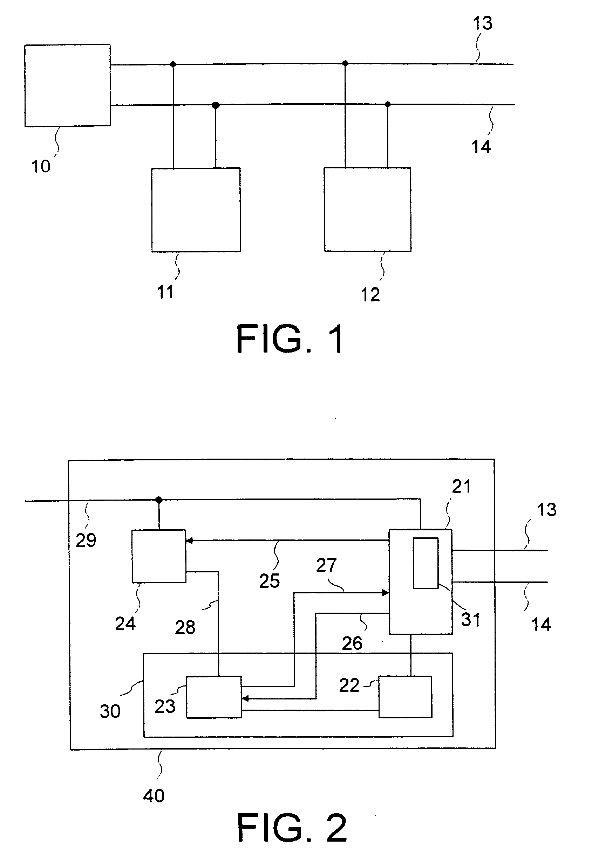

In Figur 1 ist ein erfindungsgemäßes Bussystem dargestellt, wie es z.B. in der Automobilelektronik angewendet wird. Die Stationen 10, 11, 12 kommunizieren nach einem vorgegebenen Protokoll über einen differentiellen Bus, der hier als Leitungsanordnung 13 und 14 dargestellt ist. Eine Anordnung mit mehreren Leitern ist vorstellbar. Auf diesen Leitern 13 und 14 werden Daten zwischen den Stationen 10, 11, 12 übertragen. Die Stationen 10, 11, 12 oder auch Transceiver sind beispielsweise in einem Kraftfahrzeug angeordnet und übernehmen unterschiedlichste Funktionen.

Figur 2 zeigt den Aufbau einer Station 40, die in Figur 1 als 10, 11, 12 dargestellt sind. In jeder Station 40 befindet sich ein Übertrager 21 zum Senden und Empfangen von Signalen über die Leitungsanordnung 13 und 14, in dem ein Empfänger 31 für den Empfang von ersten Wecksignalen angeordnet ist. Weiterhin enthalten Stationen 40 je eine Steuereinheit 30 mit einem Protokollcontroller 22 zur Abwicklung eines vereinbarten Übertragungsprotokolls, z.B. CAN (Controller Area Network) und einem Mikrocontroller 23 zur Abwicklung anwendungsspezifischer Aufgaben. Außerdem ist in der Station 40 eine geregelte Spannungsquelle 24 VCC angeordnet. Die ungeregelte Batteriespannung 29 wird einerseits der geregelten Spannungsquelle 24 und dem Übertrager 21 zugeführt.

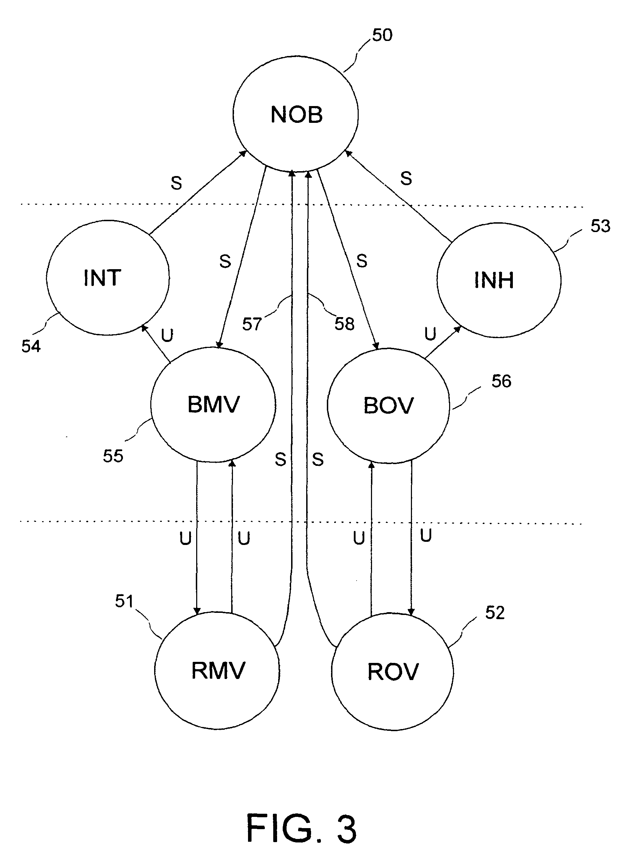

Figur 3 zeigt die Betriebszustände, in denen sich eine Station 40 befinden kann. Die Zustände 51 und 52 stellen den Ruhezustand der Station 40 dar. Im Ruhezustand ist der Strombedarf sehr gering und es ist auch nur ein Wecken mit einem ersten Wecksignal möglich. Der Ruhezustand unterteilt sich in einen Zustand 51 mit eingeschalteter geregelter Spannungsquelle VCC (RMV). In diesem Zustand 51 ist die Station 40 in der Lage lokale Teilfunktionen auszuführen. Hierbei wird der Empfänger 31 mit einer geregelten Spannung versorgt. Die Steuereinheit 30 befindet sich in einem stromsparenden Ruhezustand. Um die Energieeinsparung weiter zu effektivieren, wird die Station 40 in einem Zustand 52 mit ausgeschalteter geregelter Spannungsversorgung VCC(ROV) betrieben. In diesem Zustand 52 wird der Empfänger 31 mit einer ungeregelten Spannung 29 (VBAT) betrieben. Alle weiteren Komponenten der Station befinden sich im stromsparenden Ruhezustand. Der Empfänger 31 ist in beiden Ruhezuständen 51 und 52 in der Lage ein erstes Wecksignal zu empfangen. Nach Empfang eines ersten Wecksignals mittels Empfänger 31 im Übertrager 21 setzt der Übertrager 21 die Station 40 in einen der Bereitschaftszustände 55 oder 56.

Der Bereitschaftszustand unterteilt sich wiederum in einen Zustand 55 mit eingeschalteter VCC (BMV) und einen Zustand 56 mit ausgeschalteter VCC (BOV). Im Bereitschaftszustand ist der Strombedarf gering und ein zweites Wecksignal zum Wecken ausgewählter Station 40 kann erkannt werden. Außerdem werden vom Übertrager 21 alle Ruhespannungspegel und -impedanzen bereitgestellt, die notwendig sind, andere Stationen 40 des Bussystems miteinander kommunizieren zu lassen. Im Zustand 55 mit eingeschalteter VCC (BMV) initiiert der Übertrager 21 nach Empfang eines zweites Wecksignals einen Interrupt auf Leitung 26, der einen Warmstart INT 54 der Station 40 auslöst. Mit Empfang des Interrupt auf der Leitung 26 setzt die Steuereinheit 30 die Station 40 in den Normalzustand 50.

Im Zustand 56 mit ausgeschalteter VCC (BOV) löst der Übertrager 21 nach Empfang eines zweites Wecksignals für seine Station 40 mit einem Steuersignal auf Leitung 25 einen Kaltstart INH 53 der Station 40 aus, indem er die geregelte Spannungsquelle VCC 24 direkt einschaltet und damit die Station 40 gesteuert vom Mikrocontroller 23 in der Steuereinheit 30 in den Normalzustand 50 versetzt.

Im Normalzustand 50 ist der Strombedarf nicht reduziert und es ist eine uneingeschränkte Kommunikation möglich. In den Normalzustand 50 gelangen Stationen 40 nur auf Befehl des Mikrocontrollers 23 in der Steuereinheit 30. Aus diesem Normalzustand 50 werden die Stationen 40 anwendungsspezifisch vom Mikrocontroller 23 in den Bereitschaftszustand 55 oder 56 versetzt.

Die Zustandsübergänge zwischen Bereitschaftszuständen und Ruhezustände werden ausschließlich vom Übertrager 21 gesteuert. Dadurch wird realisiert, daß solange noch eine Kommunikation auf dem Bus stattfindet, die Stationen 40 im Bereitschaftszustand verbleiben und somit die Übertragungssicherheit des gesamten Bussystems sichergestellt ist. Erst wenn nach bestimmten Kriterien, beispielsweise nach Ablauf einer Zeit, keine Kommunikation mehr stattfand, werden die Stationen 40 von ihren Übertragern 21 in den energiesparenden Ruhezustand versetzt.

Ein weiterer Vorteil ergibt sich aus der entkoppelten Versorgung und Verantwortlichkeit von Mikrocontroller 23 und Übertrager 21. Die Verfügbarkeit des gesamten Bussystems erhöht sich. Der Übertrager 21 kann autonom die Verfügbarkeit des Bussystems sicherstellen unabhängig davon, ob der Mikrocontroller 23 funktioniert, korrekt versorgt ist oder nicht. Steuert ein Mikrocontroller 23 den Übertrager 21 über die Leitung 27 nicht ordnungsgemäß an, bleibt der Übertrager 21 je nach Erfordernissen auf der Busseite im Bereitschafts- oder Ruhezustand, die Kommunikation wird nicht eingeschränkt und es wird optimal Strom gespart. Die Verfügbarkeit ist bereits dann erhöht, wenn nur ein zweistufiges Verfahren angewendet wird, auch ohne das selektive Wecken durch die zweiten Wecksignale.

Ein kurzes Beispiel soll die Stromreduzierung veranschaulichen. In einem Bussystem mit 30 Stationen soll während des Parkens des Kraftfahrzeuges alle 5 Minuten eine Routine mit 100ms ausgeführt werden. Die heute übliche Stromaufnahme pro Station liegt bei 50µA im Ruhezustand ohne VCC und bei 100mA im Normalzustand. Liegt die daraus resultierende durchschnittliche Stromaufnahme des gesamten Bussystems heute bei ca. 2,5mA, liegt sie mit Teilnetzbetrieb bei ca. 1,568 mA (Bereitschaftszustand erfordert ca. 200µA / Station), also nur leicht über dem ohnehin einzuplanenden Ruhezustandsstrom von 1,5mA. Wächst der Strombedarf aufgrund der Menge der gewünschten Routinen heute bereits auf über 50mA, kann er durch entsprechenden Teilnetzbetrieb im Bereich des Ruhezustandsstromes von wenigen mA gehalten werden. Dies ist für den Ladezustand der Starterbatterie nach wochenlangem Parken und damit für die Verfügbarkeit des Fahrzeuges entscheidend wichtig.

## Patentansprüche

1. Bussystem mit mehreren Stationen (10,11,12), die über eine Leitungsanordnung (13,14) miteinander gekoppelt sind, die jeweils einen Übertrager (21) und eine Steuereinheit (30) aufweisen und die in einen Ruhezustand oder einen Betriebszustand versetzt werden können,
**dadurch gekennzeichnet,**
**daß** wenigstens eine Station (40) zum Wechsel vom Ruhezustand (51,52), in welchem die Station stromlos geschaltet ist, in einen Bereitschaftszustand (55,56) nach Empfang des ersten Wecksignals vorgesehen ist, wobei die Station (40) in dem Bereitschaftszustand andere Stationen ungestört kommunizieren läßt und an, in dem Bussystem ausgeführten Teilfunktionen, für die die Station (40) nicht benötigt wird, nicht teilnimmt, und
**daß** nach Empfang eines zweiten Wecksignals, mit dem Stationen (40) selektiert werden, selektierte Stationen (40) in den Normalzustand (50) mit nicht reduzierter Stromaufnahme geschaltet werden.

2. Bussystem nach Anspruch 1, **dadurch gekennzeichnet, daß** zum Empfang des ersten und zweiten Wecksignals in der Station (40) der Übertrager (21) vorgesehen ist, der die Steuereinheit (30) erst informiert, wenn das zweite Wecksignal die Station (40) selektiert und daß die Steuereinheit (30) die Station (40) vom Bereitschaftszustand (55,56) in den Normalzustand (50) schaltet.

3. Bussystem nach Anspruch 1, **dadurch gekennzeichnet, daß** der Übertrager (21) einen Empfänger (31) zum Empfang von Wecksignalen im Ruhezustand (51,52) aufweist und den Wechsel vom Ruhezustand in den Bereitschaftszustand (55,56) steuert.

4. Bussystem nach Anspruch 1, **dadurch gekennzeichnet, daß** beim Wechsel vom Normal- in den Ruhezustand, die Steuereinheit (30) die Station (40) in den Bereitschaftszustand (55,56) setzt und der Übertrager (21) nach vorgebbaren Bedingungen die Station (40) in den Ruhezustand (51, 52) schaltet.

5. Bussystem nach Anspruch 1, **dadurch gekennzeichnet, daß** bei lokal geweckten Stationen (40) die Steuereinheit (30) die Station (40) direkt in Normalzustand (50) schaltet, um anderen Stationen (40) Wecksignale zu senden.

6. Bussystem nach Anspruch 1, **dadurch gekennzeichnet, daß** die Station (40) aus einem Ruhezustand (51) mit eingeschalteter geregelter Spannungsversorgung durch den Übertrager (21) in einen Bereitschaftszustand (55) mit eingeschalteter geregelter Spannungsversorgung geschaltet wird und nach Empfang des zweiten Wecksignals der Übertrager (21) einen Warmstart (54) der Station (40) auslöst, indem er einen Interrupt auf einer Leitung (26) an die Steuereinheit sendet, um die Station(40) in den Normalzustand (50) zu schalten.

7. Bussystem nach Anspruch 1, **dadurch gekennzeichnet, daß** die Station (40) aus einem Ruhezustand (52) mit ausgeschalteter geregelter Spannungsversorgung durch den Übertrager (21) in einen Bereitschaftszustand (56) mit ausgeschalteter geregelter Spannungsversorgung geschaltet wird und nach Empfang des zweiten Wecksignals der Übertrager (21) einen Kaltstart (53) der Station (40) auslöst, indem er die geregelte Spannungsversorgung mit einem Steuersignal auf einer Leitung(25) einschaltet und die Station (40) in den Normalzustand (50) versetzt.

8. Bussystem nach Anspruch 1,
**dadurch gekennzeichnet,**
**daß** die Steuereinheit (30) einen anwendungsgesteuerten Mikrocontroller (23) und einen Protokollcontroller (22) aufweist.

9. Station (40) in einem Bussystem mit einem Übertrager (21) und einer Steuereinheit (30), wobei die Station in einen Ruhezustand oder einen Betriebszustand versetzt werden können
**dadurch gekennzeichnet,**
**daß** die Station (40) für den Wechsel vom Ruhezustand (51,52), in welchem die Station stromlos geschaltet ist, in einen Bereitschaftszustand (55,56) nach Empfang eines ersten Wecksignals der Übertrager (21) vorgesehen ist, wobei die Station (40) in dem Bereitschaftszustand andere Stationen ungestört kommunizieren läßt und an in dem Bussystem ausgeführten Teilfunktionen, für die die Station (40) nicht benötig wird, nicht teilnimmt, und
**daß** nach Empfang eines zweiten Wecksignals, mit dem die Station (40) selektiert wird, diese von der Steuereinheit (30) in den Normalzustand (50) mit nicht reduzierter Stromaufnahme geschaltet wird.

## Claims

1. A bus system comprising a plurality of stations (10, 11, 12) which are coupled to one another via a system of conductors (13, 14) and each of which includes a transceiver (21) and a control unit (30) and which can each be set to an idle mode or an operating mode, **characterized**
**in that** at least one station (40) is arranged to switch over from the idle mode (51, 52), in which the station is switched powerless, to a standby mode (55, 56) in response to the reception of the first wake-up signal, the station (40) in the stand-by mode allowing other stations to communicate in undisturbed manner, and not taking part in partial functions for which the station (40) is not needed, and
**in that** in response to the reception of a second wake-up signal with which stations (40) are selected, selected stations (40) in the normal operating mode (50) are switched with nonreduced power consumption.

2. A bus system as claimed in claim 1, **characterized in that** the transceiver (21) is arranged to receive the first and the second wake-up signal in the station (40), which transceiver informs the control unit (30) only when the second wake-up signal selects the station (40), and **in that** the control unit (30) switches the station (40) from the standby mode (55, 56) to the normal operating mode (50).

3. A bus system as claimed in claim 1, **characterized in that** the transceiver (21) includes a receiver (31) for the reception of wake-up signals in the idle mode (51, 52) and controls the switching over from the idle mode to the standby mode (55, 56).

4. A bus system as claimed in claim 1, **characterized in that** upon switching over from the normal operating mode to the idle mode the control unit (30) switches the station (40) to the standby mode (55, 56) and the transceiver (21) switches the station (40) to the idle mode (51, 52) after predefinable conditions have been satisfied.

5. A bus system as claimed in claim 1, **characterized in that** in the case of locally wakened stations (40) the control unit (30) switches the station (40) directly to the normal operating mode (50) in order to send wake-up signals to other stations (40).

6. A bus system as claimed in claim 1, **characterized in that** the transceiver (21) switches the station (40) from an idle mode (51) with switched-on regulated voltage supply to a standby mode (55) with switched-on regulated voltage supply and in response to the reception of the second wake-up signal the transceiver (21) initiates a warm start (54) of the station (40) **in that** it dispatches an interrupt, via a lead (26), to the control unit in order to switch the station (40) to the normal operating mode (50).

7. A bus system as claimed in claim 1, **characterized in that** the transceiver (21) switches the station (40) from an idle mode (52) with switched-off regulated voltage supply to a standby mode (56) with switched-off regulated voltage supply and in response to the reception of the second wake-up signal the transceiver (21) initiates, a cold start (53) of the station (40) **in that** it switches on the regulated voltage supply by means of a control signal on a lead (25) and switches the station (40) to the normal operating mode (50).

8. A bus system as claimed in claim 1, **characterized in that** the control unit (30) includes an application-controlled microcontroller (23) and a protocol controller (22).

9. A station (40) with a transceiver (21) and a control unit (30) in a bus system, which station can be set to an idle mode or an operating mode, **characterized**
**in that** in the station (40) the transceiver (21) is provided for the change from the idle mode (51, 52), in which the station is switched powerless, to a stand-by mode (55, 56) in response to the reception of a first wake-up signal, the station (40) in the stand-by mode allowing other stations to communicate in undisturbed manner, and not taking part in partial functions for which the station (40) is not needed, and
**in that** in response to the reception of a second wake-up signal, with which the station (40) is selected, this selected station (40) in the normal operating mode (50) is switched with nonreduced power consumption.

## Revendications

1. Système de bus avec plusieurs stations (10, 11, 12) qui sont couplées entre elles par un agencement conducteur (13, 14), qui présentent respectivement un transmetteur (21) et une unité de commande (30) et qui peuvent être placées dans un état de repos ou dans un état de service,
**caractérisé en ce que**
au moins une station (40) est prévue pour le changement à partir de l'état de repos (51, 52) dans lequel la station est commutée sans courant, vers un état de disponibilité (55, 56) après réception d'un premier signal de réveil, la station (40) à l'état de disponibilité faisant communiquer d'autres stations sans problème et ne participe pas à des fonctions partielles exécutées dans le système de bus, pour lesquelles la station (40) n'est pas nécessaire, et
après réception d'un second signal de réveil, par lequel des stations (40) sont sélectionnées, les stations (40) sélectionnées sont commutées vers l'état normal (50) avec une absorption de courant non réduite.

2. Système de bus selon la revendication 1, **caractérisé en ce que**, pour la réception du premier et du second signal de réveil dans la station (40), il est prévu le transmetteur (21) qui informe d'abord l'unité de commande (30) lorsque le second signal de réveil sélectionne la station (40), et **en ce que** l'unité de commande (30) commute la station (40) de l'état de disponibilité (55, 56) vers l'état normal (50).

3. Système de bus selon la revendication 1, **caractérisé en ce que** le transmetteur (21) comporte un récepteur (31) pour la réception des signaux de réveil à l'état de repos (51, 52) et commande le changement de l'état de repos vers l'état de disponibilité (55, 56).

4. Système de bus selon la revendication 1, **caractérisé en ce que** lors du changement de l'état normal vers l'état de repos, l'unité de commande (30) met la station (40) à l'état de disponibilité (55, 56) et le transmetteur commute la station (40) vers l'état de repos (51, 52) après présence de conditions requises.

5. Système de bus selon la revendication 1, **caractérisé en ce que**, pour les stations réveillées localement (40), l'unité de commande (30) commute directement la station (40) vers l'état normal (50), afin d'envoyer des signaux de réveil aux autres stations (40).

6. Système de bus selon la revendication 1, **caractérisé en ce que** la station (40) est commutée par le transmetteur (21) à partir d'un état de repos (51) avec une alimentation de tension allumée et régulée, vers un état de disponibilité (55) avec une alimentation de tension allumée et régulée, et après réception du second signal de réveil, le transmetteur (21) déclenche un démarrage de chauffe (54) de la station (40) tout en envoyant un signal Interrupt sur un conducteur (26) à destination de l'unité de commande, afin de commuter la station (40) vers l'état normal (50).

7. Système de bus selon la revendication 1, **caractérisé en ce que** la station (40) est commutée par le transmetteur (21) depuis un état de repos (52) avec l'alimentation de tension régulée éteinte, vers un état de disponibilité (56) avec une alimentation de tension régulée éteinte, et après réception du second signal de réveil, le transmetteur (21) déclenche un démarrage à froid (53) de la station (40), tandis que l'alimentation de tension régulée s'enclenche avec un signal de commande sur un conducteur (25) et met la station (40) à l'état normal (50).

8. Système de bus selon la revendication 1,
**caractérisé en ce que**
l'unité de commande (30) présente un microcontrôleur (23) commandé par application et un contrôleur de protocole (22).

9. Station (40) dans un système de bus avec un transmetteur (21) et une unité de commande (30), la station pouvant être mise dans un état de repos ou dans un état de disponibilité,
**caractérisée en ce que**
la station (40), pour le changement à partir de l'état de repos (51, 52), dans lequel la station est commutée sans courant, vers un état de disponibilité (55, 56) après réception d'un premier signal de réveil, il est prévu le transmetteur (21), de telle sorte que la station (40) dans l'état de disponibilité fait communiquer les autres stations sans problème et ne prend pas part aux fonctions partielles effectuées par le système de bus, pour lesquelles la station (40) n'est pas nécessaire, et
**en ce que** la réception d'un second signal de réveil, avec lequel la station (40) est sélectionnée, celle-ci est commutée depuis l'unité de commande (30) vers l'état normal (50) avec une absorption de courant non réduite.
